# EUROPÄISCHE PATENTSCHRIFT

(11) **EP 0 987 140 B1**
(45) Veröffentlichungstag und Bekanntmachung des Hinweises auf die Patenterteilung: **16.04.2003**
(21) Anmeldenummer: 99890300.9
(22) Anmeldetag: 17.09.1999
(51) Int. Cl.: B60N 2/00

(54) **Sitzbank für Kraftfahrzeuge**
Bench seat for automotive vehicles
Banquette pour véhicules automobiles

(30) Priorität: 17.09.1998 DE 19842595
(43) Veröffentlichungstag der Anmeldung: 22.03.2000
(73) Patentinhaber: Magna-Sitzsysteme GmbH, 97816 Lohr/Main (DE)
(72) Erfinder: Rust, Franz Arnold, 63867 Johannesberg (DE)
(74) Vertreter: Pfiz, Thomas, Dr.

(56) Entgegenhaltungen:
- EP-A- 0 736 412
- WO-A-98/41419
- WO-A-99/29534
- DE-A- 19 628 699
- FR-A- 2 663 270

## Beschreibung

Die Erfindung betrifft eine Sitzbank mit Sitzfläche und Rückenlehne für Kraftfahrzeuge, insbesondere des Kombi- oder Van-Typs, die zur Bereitstellung zusätzlichen Frachtraumes aus ihrer Gebrauchsposition entfernbar ist und wobei die Sitzfläche hochklappbar an der Rückenlehne befestigt ist.

Eine derartige Sitzbank ist zum Beispiel aus der DE-A 19628699 bekannt.

Zur Vergrößerung des Frachtraumes von Kraftfahrzeugen sind verschiedene Möglichkeiten bekannt geworden, die von dem einfachen Umklappen der Rückenlehne nach vorne bis zum kompletten Ausbau einzelner Sitze bzw. einer oder mehrerer Sitzbänke reichen. Wird nur eine Rückenlehne oder ein Teil davon nach vorne umgeklappt, ergibt sich meist keine glatte Ladefläche, so daß der hinzugewonnene Frachtraum nur bedingt nutzbar ist. Wesentlich günstiger ist es demgegenüber, wenn nicht nur die Rückenlehne, sondern auch die Sitzfläche nach vorne umgeklappt werden kann, weil dann eher größere und durchgängig glatte Ladeflächen erzielbar sind.

Mit dem Ausbau einzelner Sitze oder Sitzbänke vergrößert sich der Frachtraum selbstverständlich zusätzlich um das Volumen, das von den ausgebauten Teilen eingenommen wird, so daß der bei solchen Fahrzeugen vorhandene Frachtraum optimal genutzt werden kann. Abgesehen von dem nicht immer ganz einfachen Aus- und Einbau besteht in derartigen Fällen aber der Nachteil, daß auch die Rückfahrt mit vermindertem Sitzplatzangebot angetreten werden muß, weil die ausgebauten Sitzmöglichkeiten zu Hause in der Garage stehen. Ein bei der Rückfahrt auftretender, erhöhter Sitzplatzbedarf kann also nicht bedeckt werden.

Der Erfindung liegt daher die Aufgabe zugrunde, die Bereitstellung von zusätzlichem Frachtraum bei den eingangs genannten Fahrzeugtypen weiter zu verbessern und zu erleichtern und insbesondere die aufgezeigten Nachteile zu vermeiden.

Diese Aufgabe wird durch die kennzeichnenden Merkmale des Anspruchs 1 gelöst.

Zur Lösung dieser Aufgabe wird vorgeschlagen, daß die Sitzfläche hochklappbar an der Rückenlehne befestigt ist und daß ein im dachseitigen Ende eines Holmpaares drehbar gelagerter Tragrahmen vorgesehen ist, an dem die Sitzbank befestigt und durch den die Sitzbank nach dem Hochklappen der Sitzfläche gegen die Rückenlehne aus der Gebrauchsposition in eine Stapellage unmittelbar unterhalb des Fahrzeugdaches schwenkbar ist.

Die Erfindung geht davon aus, daß es wünschenswert ist, die bei vergrößertem Farchtraumbedarf nicht genutzten Sitze jederzeit schnell wieder verfügbar zu machen, wenn der zusätzliche Frachtraum nicht mehr benötigt wird. Dabei macht man sich zunutze, daß vielfach zwar eine große Ladefläche benötigt wird, der Frachtraum aber nur selten bis unter das Fahrzeugdach ausgenutzt wird. Mit der erfindungsgemäßen Lösung wird der insgesamt verfügbare Frachtraum also nur dort eingeschränkt, wo er in der überwiegenden Zahl der Anwendungsfälle ohnehin nicht genutzt werden kann. Insbesondere bei Fahrzeugen des Kombi-Typs und bei den kleineren Van-Typen kann so eine erhebliche Vergrößerung des Frachtraumes erreicht werden, ohne daß man die nicht benötigte Sitzbank zu Hause lassen muß. Die Bereitstellung des zusätzlichen Frachtraumes ist mit wenigen Handgriffen zu bewerkstelligen, ohne daß große Gewichte bewegt werden müßten und ohne daß schwierige Montagearbeiten anfallen.

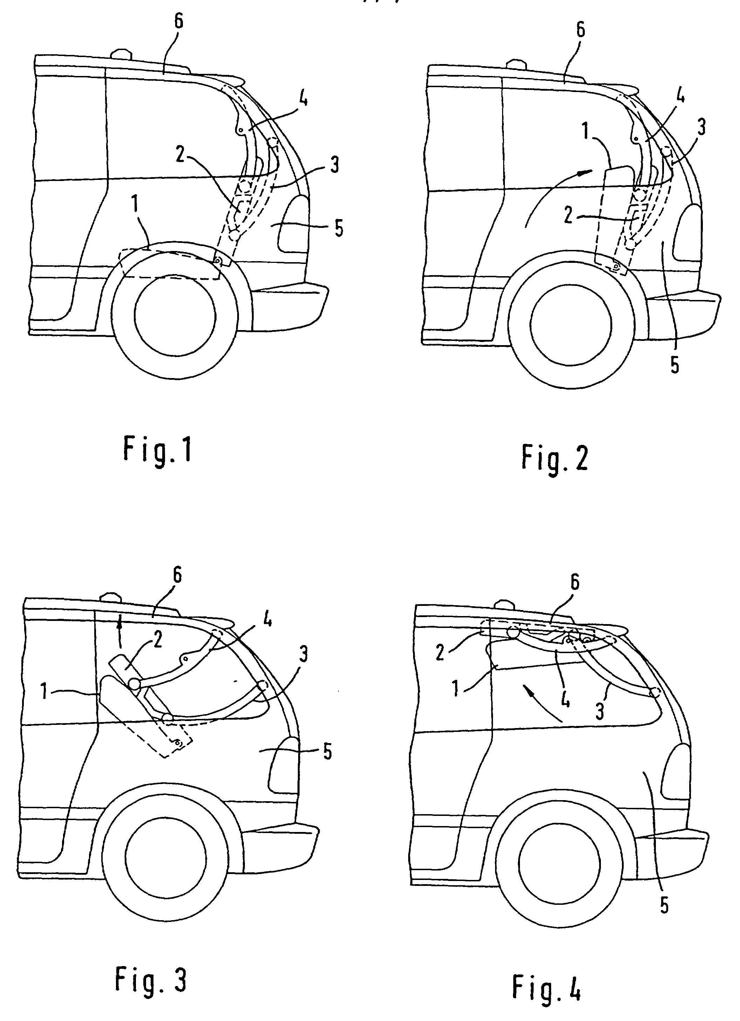

Zweckmäßige Ausgestaltungen und Weiterbildungen des Erfindungsgedankens sind in den Unteransprüchen 2 bis 14 beschrieben. Weitere Einzelheiten und Vorteile werden anhand des in den Figuren 1 bis 4 dargestellten ausführungsbeispiels näher erläutert.

In den Figuren 1 bis 4 sind vier verschiedene Positionen der erfindungsgemäßen Sitzbank dargestellt, wobei die Bezugsziffern jeweils bedeuten:
1. Sitzfläche
2. Rückenlehne
3. Hebelpaar
4. Hebelpaar
5. Fahrzeugkarosserie
6. Fahrzeugdach

Die beiden Hebelpaare 3 und 4 sind einerseits mit der Rückenlehne 2 und andererseits mit der Fahrzeugkarosserie 5 derart gelenkig verbunden, daß sie um quer zur Fahrzeuglängsrichtung ausgerichtete Achsen schwenkbar sind und zusammen mit der Rückenlehne 2 und der Fahrzeugkarosserie 5 eine Viergelenk-Mechanik bildet. Wie aus den Figuren 1 bis 4 ohne weiteres ersichtlich, muß zur Entfernung der Sitzbank aus ihrer Gebrauchsposition (Figur 1) in ihren Stauposition (Figur 4) zunächst die Sitzfläche 1 nach oben gegen die Rückenlehne hochgeklappt werden, bis sie die in Figur 2 gezeigte Position einnimmt. Anschließend kann die Sitzbank mittels der Viergelenk-Mechanik über die Zwischenposition gemäß Figur 3 in ihre Stauposition geschwenkt werden. Die Hebelpaare 3 und 4 sind außen seitlich an der Rückenlehne 2 angelenkt und so ausgestaltet, daß die Sitzbank zwischen ihnen ungehindert schwenkbar ist und daß auch die Hebelpaare selbst sich gegenseitig nicht behindern.

Einzelheiten der konstruktiven Ausgestaltung der Hebelpaare, ihrer Anlenkung an der Rückenlehne und der Fahrzeugkarosserie sowie zweckmäßige Weiterbildungen und Ergänzungen für die erfindungsgemäße Sitzbank sind den Unteransprüchen zu entnehmen.

## Patentansprüche

1. Sitzbank mit Sitzfläche und Rückenlehne für Kraftfahrzeuge, insbesondere des Kombi- oder Van-Typs, die zur Bereitstellung zusätzlichen Frachtraumes aus ihrer Gebrauchsposition entfernbar ist, und wobei
die Sitzfläche (1) hochklappbar an der Rückenlehne (2) befestigt ist,
**dadurch gekennzeichnet**
**daß** die Rückenlehne (2) über zwei Hebelpaare (3, 4) schwenkbar mit der Fahrzeugkarosserie (5) verbunden ist, die zusammen mit der Rückenlehne (2) und der Fahrzeugkarosserie (5) eine Viergelenk-Mechanik bilden, mittels derer die Sitzbank (1, 2) um quer zur Fahrzeuglängsachse ausgerichtete Achsen in eine Stauposition unter dem Fahrzeugdach (6) schwenkbar ist.

2. Sitzbank nach Anspruch 1,
**dadurch gekennzeichnet,**
**daß** die Hebelpaare (3, 4) auf etwa ein Drittel und zwei Drittel der Höhe außen an der Rückenlehne (2) angelenkt sind.

3. Sitzbank nach Anspruch 1 oder 2,
**dadurch gekennzeichnet,**
**daß** die Hebelpaare (3, 4) in der Fahrzeugkarosserie (5) oberhalb der Sitzbank (1, 2) angelenkt sind.

4. Sitzbank nach Anspruch 3,
**dadurch gekennzeichnet,**
**daß** ein erstes Hebelpaar in der Fahrzeugkarosserie (5) oberhalb des oberen Endes der Rückenlehne (2) und etwa in Verlängerung der Rückenlehnengebrauchsposition sowie an der Rückenlehne (2) auf etwa ein Drittel von deren Höhe angelenkt ist.

5. Sitzbank nach Anspruch 3,
**dadurch gekennzeichnet,**
**daß** ein zweites Hebelpaar (4) in der Fahrzeugkarosserie (5) höher und weiter vorn als das erste Hebelpaar (3) und an der Rückenlehne (2) auf etwa zwei Drittel von deren Höhe angelenkt ist.

6. Sitzbank nach einem der Ansprüche 1 bis 5,
**dadurch gekennzeichnet,**
**daß** die Hebelpaare (3, 4) derart ausgebildet und angelenkt sind, daß sie zumindest im kinematischen Überlappungsbereich quer zur Fahrzeuglängsrichtung nebeneinander schwenkbar sind.

7. Sitzbank nach Anspruch 6,
**dadurch gekennzeichnet,**
**daß** die Schwenkbereiche der Hebel des zweiten Hebelpaares (4) quer zur Fahrzeuglängsrichtung weiter außen liegen als die Schwenkbereiche der Hebel des ersten Hebelpaares (3).

8. Sitzbank nach einem der Ansprüche 1 bis 7,
**dadurch gekennzeichnet,**
**daß** alle Hebel etwa gleich lang ausgebildet sind.

9. Sitzbank nach Anspruch 8,
**dadurch gekennzeichnet,**
**daß** alle Hebel zwischen den Anlenkpunkten derart gebogen ausgebildet sind, daß ihre Auswölbung in der Gebrauchsposition der Sitzbank (1, 2) nach hinten und in der Stauposition der Sitzbank (1, 2) nach unten weist.

10. Sitzbank nach einem der Ansprüche 1 bis 9,
**dadurch gekennzeichnet,**
**daß** die Stauposition der Sitzbank (1, 2) unmittelbar unterhalb des Fahrzeugdachs (6) und in Fahrzeuglängsrichtung gesehen vor den Anlenkpunkten des zweiten Hebelpaares (4) in der Fahrzeugkarosserie (5) ausgebildet ist.

11. Sitzbank nach einem der Ansprüche 1 bis 10,
**dadurch gekennzeichnet,**
**daß** pneumatische, hydraulische oder mechanische Mittel zur Erleichterung der Schwenkbewegung vorgesehen sind.

12. Sitzbank nach einem der Ansprüche 1 bis 11,
**dadurch gekennzeichnet,**
**daß** sie sowohl in der Gebrauchsposition wie auch in der Stauposition mit der Fahrzeugkarosserie (5) verrastbar ist.

13. Sitzbank nach Anspruch 12,
**dadurch gekennzeichnet,**
**daß** die Rastverbindungen mittels eines Riemenzuges oder dergleichen entriegelbar sind.

14. Sitzbank nach Anspruch 12 oder 13,
**dadurch gekennzeichnet,**
**daß** bei eingeschalteter Zündung für den Fahrzeugmotor zumindest die Staulage zusätzlich gesichert und nicht entriegelbar ist.

## Claims

1. A bench seat having a seat surface and backrest for motor vehicles, particularly of the estate or van type, which can be moved out of its position of use in order to provide additional luggage space, and in which the seat surface (1) is fixed to the back rest (2) such that it can be folded upright, **characterised in that** the back rest (2) is pivotally connected to the vehicle body (5) by way of two lever pairs (3, 4) which, together with the backrest (2) and the vehicle body (5), form a four-bar mechanical system by means of which the bench seat (1, 2) can be pivoted about axes aligned transversely to the longitudinal axis of the vehicle into a storage position below the vehicle roof (6).

2. A bench seat according to Claim 1, **characterised in that** the lever pairs (3, 4) are coupled to the outsides of the backrest (2) at points approximately one third and two thirds of the way up the backrest.

3. A bench seat according to Claim 1 or 2, **characterised in that** the lever pairs (3, 4) are coupled in the vehicle body (5) above the bench seat (1, 2).

4. A bench seat according to Claim 3, **characterised in that** a first lever pair is coupled in the vehicle body (5) above the upper end of the backrest (2) and, in an approximate extension of the position of use of the back rest, is coupled to the backrest (2) at a point approximately one third of the way up the backrest.

5. A bench seat according to Claim 3, **characterised in that** a second lever pair (4) is coupled in the vehicle body (5) such that it is higher and further forward than the first lever pair (3), and is coupled to the back rest (2) at a point approximately two thirds of the way up the backrest.

6. A bench seat according to one of Claims 1 to 5, **characterised in that** the lever pairs (3, 4) are designed and coupled such that they can be pivoted next to one another transversely to the longitudinal direction of the vehicle, at least in a kinematic overlapping region.

7. A bench seat according to Claim 6, **characterised in that** the pivot regions of the levers of the second lever pair (4) transversely to the longitudinal direction of the vehicle are located further out than the pivot regions of the levers of the first lever pair (3).

8. A bench seat according to one of Claims 1 to 7, **characterised in that** all the levers are designed such that they are approximately equal in length.

9. A bench seat according to Claim 8, **characterised in that** all the levers are designed such that they are bent between the coupling points in such a way that their outer curvature points to the rear when the bench seat (1, 2) is in the position of use and downwards when the bench seat (1, 2) is in the storage position.

10. A bench seat according to one of Claims 1 to 9, **characterised in that** the storage position of the bench seat (1, 2) is designed such that it is directly below the vehicle roof (6) and, as seen in the longitudinal direction of the vehicle, in front of the coupling points of the second lever pair (4) in the vehicle body (5).

11. A bench seat according to one of Claims 1 to 10, **characterised in that** pneumatic, hydraulic or mechanical means are provided to facilitate the pivotal movement.

12. A bench seat according to one of Claims 1 to 11, **characterised in that** it can be latched to the vehicle body (5) both in the position of use and in the storage position.

13. A bench seat according to Claim 12, **characterised in that** the latching connections can be unlocked by pulling a strap or the like.

14. A bench seat according to Claim 12 or 13, **characterised in that**, when the ignition for the vehicle engine is turned on, at least the storage position is additionally secured and cannot be unlocked.

## Revendications

1. Banquette pour véhicules automobiles, notamment du type familiale ou fourgonnette, comprenant une surface d'assise et un dossier, et pouvant quitter sa position d'utilisation en vue d'offrir un espace utile supplémentaire, ladite surface d'assise (1) étant fixée au dossier (2) avec faculté de soulèvement par pivotement,
**caractérisée par le fait**
**que** le dossier (2) est relié à la carrosserie (5) du véhicule, avec faculté de pivotement, par l'intermédiaire de deux paires de leviers (3, 4) qui forment, en association avec ledit dossier (2) et avec ladite carrosserie (5) du véhicule, un mécanisme à quatre articulations au moyen duquel la banquette (1, 2) peut être amenée, par pivotement autour d'axes orientés transversalement par rapport à l'axe longitudinal du véhicule, à une position de stockage au-dessous du pavillon (6) dudit véhicule.

2. Banquette selon la revendication 1,
**caractérisée par le fait**
**que** les paires de leviers (3, 4) sont articulées extérieurement sur le dossier (2), environ à un tiers et deux tiers de la hauteur.

3. Banquette selon la revendication 1 ou 2,
**caractérisée par le fait**
**que** les paires de leviers (3, 4) sont articulées dans la carrosserie (5) du véhicule, au-dessus de ladite banquette (1, 2).

4. Banquette selon la revendication 3,
**caractérisée par le fait**
**qu'**une première paire de leviers est articulée dans la carrosserie (5) du véhicule, au-dessus de l'extrémité supérieure du dossier (2) et sensiblement dans le prolongement de la position d'utilisation dudit dossier ; ainsi que sur ledit dossier (2), à environ un tiers de la hauteur de ce dernier.

5. Banquette selon la revendication 3,
**caractérisée par le fait**
**qu'**une seconde paire de leviers (4) est articulée, dans la carrosserie (5) du véhicule, en position plus haute et plus avancée que la première paire de leviers (3) ; et, sur le dossier (2), à environ deux tiers de la hauteur de celui-ci.

6. Banquette selon l'une des revendications 1 à 5,
**caractérisée par le fait**
**que** les paires de leviers (3, 4) sont réalisées et articulées de façon telle qu'elles puissent pivoter en juxtaposition, transversalement par rapport à la direction longitudinale du véhicule, au moins dans la zone de chevauchement cinématique.

7. Banquette selon la revendication 6,
**caractérisée par le fait**
**que** les plages de pivotement des leviers de la seconde paire de leviers (4), transversalement par rapport à la direction longitudinale du véhicule, sont situées davantage à l'extérieur que les plages de pivotement des leviers de la première paire de leviers (3).

8. Banquette selon l'une des revendications 1 à 7,
**caractérisée par le fait**
**que** tous les leviers sont réalisés de longueur sensiblement identique.

9. Banquette selon la revendication 8,
**caractérisée par le fait**
**que** tous les leviers présentent, entre les points d'articulation, une réalisation cintrée telle que leur bombement soit orienté vers l'arrière dans la position d'utilisation de la banquette (1, 2), et vers le bas dans la position de stockage de ladite banquette (1, 2).

10. Banquette selon l'une des revendications 1 à 9,
**caractérisée par le fait**
**que**, observée directement au-dessous du pavillon (6) du véhicule et dans la direction longitudinale dudit véhicule, la position de stockage de ladite banquette (1, 2) se trouve devant les points d'articulation de la seconde paire de leviers (4) dans la carrosserie (5) du véhicule.

11. Banquette selon l'une des revendications 1 à 10,
**caractérisée par le fait**
**que** des moyens pneumatiques, hydrauliques ou mécaniques sont prévus pour faciliter le mouvement pivotant.

12. Banquette selon l'une des revendications 1 à 11,
**caractérisée par le fait**
**qu'**elle peut être encliquetée sur la carrosserie (5) du véhicule, tant dans la position d'utilisation que dans la position de stockage.

13. Banquette selon la revendication 12,
**caractérisée par le fait**
**que** les liaisons encliquetées peuvent être déverrouillées au moyen d'un système de traction par courroie, ou système similaire.

14. Banquette selon la revendication 12 ou 13,
**caractérisée par le fait**
**que**, lorsque l'allumage du moteur du véhicule est enclenché, au moins la position de stockage est additionnellement arrêtée et ne peut pas être déverrouillée.
